# EUROPÄISCHE PATENTANMELDUNG

(11) **EP 2 347 921 A1**
(43) Veröffentlichungstag der Anmeldung: **27.07.2011**
(21) Anmeldenummer: 11151129.1
(22) Anmeldetag: 17.01.2011
(51) Int. Cl.: B60H 1/00

(54) **Manuelle Klimaanlage eines Kraftfahrzeugs**

(30) Priorität: 26.01.2010 DE 102010005669
(71) Anmelder: Ford Global Technologies, LLC, Dearborn, MI 48126 (US)
(72) Erfinder: Fischer, Dietmar, 50733, Köln (DE); Ostendorf, Andreas, 50259, Pulheim (DE); Becker, Stefan, 51503, Rösrath (DE); Wolter, Stefan, 50735, Köln (DE); Grabke, Jörn, 50933, Köln (DE); Laansoo, Eero, Bloomfield Hills, MI 48302 (US)
(74) Vertreter: Dörfler, Thomas

(57) **Zusammenfassung**

Manuelle Klimaanlage eines Kraftfahrzeugs mit einer Bedienvorrichtung mit wenigstens einem in einem Innenraumbereich des Kraftfahrzeugs angeordneten Bedienelement (3), das für eine manuelle Einstellung einer Betriebsfunktion in einer Bedienebene beweglich gelagert ist, und mit einer Schaltanordnung für eine Betätigung einer Antibeschlag-Betriebsfunktion der Klimaanlage, dadurch gekennzeichnet, dass das manuelle Bedienelement ein Temperaturvorgabe-Bedienelement (3) ist und das Temperaturvorgabe-Bedienelement mit der Schaltanordnung derart in Wirkverbindung steht, dass die Antibeschlag-Betriebsfunktion in einer Stellung (9) des Temperaturvorgabe-Bedienelements auslösbar ist.

## Beschreibung

Die Erfindung betrifft eine manuelle Klimaanlage eines Kraftfahrzeugs nach dem Oberbegriff des Anspruchs 1

Kraftfahrzeugklimaanlagen umfassen üblicherweise eine sogenannten Defrost- oder Antibeschlag-Betriebsfunktion, in der die Front- und/oder Seitenscheiben sowie ggf. die Heckscheiben von Beschlägen, Feuchtigkeit und ggf. Eis befreit werden, wie dies beispielsweise im Herbst und Winter nötig ist.

Bei automatischen Klimaanlagen, also solchen, die automatisch die notwendigen und optimalen Einstellungen vornehmen, muss der Fahrer bei Bedarf nur auf eine entsprechende Taste drücken, um die Antibeschlag-Betriebsfunktion ein- bzw. auszuschalten.

Aus der DE 19621025 A1 ist eine Bedienvorrichtung für eine Klimaanlage eines Kraftfahrzeugs mit wenigstens einem in einem Innenraumbereich des Kraftfahrzeugs angeordneten Bedienelement bekannt, das für eine manuelle Einstellung einer Betriebsfunktion in einer Bedienebene beweglich gelagert ist, sowie mit einer Schaltanordnung für eine Betätigung einer automatischen Betriebsfunktion der Klimaanlage, wobei das Bedienelement zusätzlich lotrecht zu der Bedienebene axial beweglich gelagert ist, und die Schaltanordnung zur Betätigung der automatischen Betriebsfunktion der Klimaanlage mit der Axialbeweglichkeit des Bedienelementes in Wirkverbindung steht.

Mit dieser Bedienvorrichtung kann die Klimaanlage im Wechsel automatisch oder manuell betrieben werden.

Allerdings besteht nach wie vor das Problem, dass es bei manuellen Klimaanlagen nicht ohne weiteres möglich ist, eine Fehlbedienung der Klimaanlage bei der Wahl der Antibeschlag-Betriebsfunktion zu verhindern und eine optimale Auswahl der Einstellungen sicherzustellen.

Diese Aufgabe wird durch die in Anspruch 1 angegebene manuelle Klimaanlage gelöst.

Dadurch, dass das manuelle Bedienelement ein Temperaturvorgabe-Bedienelement ist und das Temperaturvorgabe-Bedienelement mit der Schaltanordnung derart in Wirkverbindung steht, dass die Antibeschlag-Betriebsfunktion in einer Stellung des Temperaturvorgabe-Bedienelements auslösbar ist, wird gleichzeitig mit der Auswahl der höchsten Temperatur der Klimaanlage die Antibeschlag-Betriebsfunktion geschaltet.

Insoweit sind Fehlbedienungen durch falsche Auswahl der Temperatur ausgeschlossen. Zusätzlich kann so auf gesonderte Bedienelemente, wie Druckknöpfe verzichtet werden.

Insbesondere ist daher die Stellung des manuellen Temperaturvorgabe-Bedienelements die Stellung für die Vorgabe der wärmsten Temperatur. Bevorzugterweise ist daher die Schaltanordnung durch das Temperaturvorgabe-Bedienelement in der Stellung auslösbar ausgestaltet.

Mit anderen Worten, am Ende des Temperaturvorgabepfads befindet sich eine Schaltposition, die bei Einnahme die Antibeschlag-Betriebsfunktion einschaltet und gleichzeitig die höchste Temperaturvorgabe beibehält, die die wichtigste Einstellung für die Antibeschlag-Betriebsfunktion darstellt.

Sinnvollerweise umfasst dazu das Temperaturvorgabe-Bedienelement einen Schalter, der in der Stellung betätigt wird, um die Antibeschlag-Betriebsfunktion einzuschalten, also die Schaltanordnung betätigt.

Zusätzlich zu der Auswahl der höchsten Temperaturvorgabe ist es sinnvoll, wenn weitere Betriebsfunktionen der Klimaanlage für den Antibeschlag-Betrieb ausgewählt bzw. eingestellt werden. Im Sinne einer "Halb-Automatik" ist es daher bevorzugt, wenn das Temperaturvorgabe-Bedienelement zusätzlich einen Schalter umfasst, der in der Stellung betätigt wird, um eine Umluft-Betriebsfunktion auszuschalten, um eine Luftentfeuchtungs-Betriebsfunktion und/oder eine Klimaanlagen-Betriebsfunktion einzuschalten, um eine Front- und/oder Heckscheibenheizung-Betriebsfunktion einzuschalten, um eine Gebläse-Betriebsfunktion auf maximale Stärke zu schalten und/oder um eine Luftverteilungs-Betriebsfunktion zu schalten, um die Lüftung auf die Front- und/oder Seitenscheiben zu lenken.

Bevorzugterweise ist das Temperaturvorgabe-Bedienelement ein Drehregler, da dieser eine nur geringe Einbautiefe aufweist. Das Temperaturvorgabe-Bedienelement kann aber auch als Schieberegler ausgeführt sein.

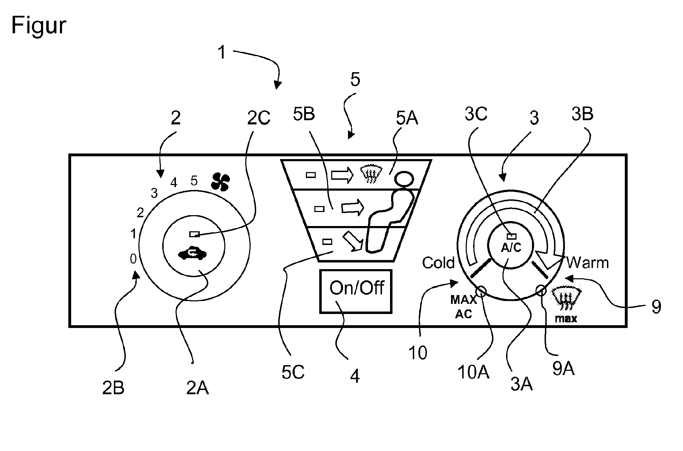

Weitere Vorteile und Einzelheiten der Erfindung ergeben sich aus der nachfolgenden Beschreibung einer Ausführungsform anhand der einzigen Zeichnung, in der schematisch eine Draufsicht auf eine Bedienvorrichtung einer manuellen Klimaanlage eines Personenkraftwagens dargestellt ist.

In der Figur ist die Bedienvorrichtung als Ganzes mit 1 bezeichnet. Die Bedienvorrichtung 1 umfasst ein Gebläse-Bedienelement 2 in Form eines zentralen Drehreglers 2A mit umlaufender Skala 2B. Der Drehregler 2A ist zusätzlich als Druckknopf ausgeführt, um die Umluftfunktion der Klimaanlage ein- bzw. auszuschalten. Daher ist der Drehregler 2A auch mit einem entsprechenden Symbol versehen und umfasst eine den Umluftbetriebszustand enzeigende LED 2C.

Die Bedienvorrichtung 1 umfasst ferner ein Temperaturvorgabe-Bedienelement 3 in Form eines zentralen Drehreglers 3A mit umlaufender Skala 3B, die in etwa bei 8 Uhr beginnt und bei 4 Uhr endet. In der 8 Uhr Position ist die kälteste Temperatureinstellung und in der 4 Uhr Position die wärmste Temperatureinstellung ausgewählt. Der Temperaturverlauf wird durch den Übergang bzw. Verlauf von Blau nach Rot angedeutet.

Der Drehregler 3A ist zusätzlich als Druckknopf ausgeführt, um die Klimaanlage ein- bzw. auszuschalten. Daher ist der Drehregler 3A auch mit einem entsprechenden Symbol versehen und umfasst eine den Umluftbetriebszustand enzeigende LED 3C.

Zwischen den Drehreglern 2A und 3A sind ein zentraler Ein- bzw. Ausschalter 4 und ein Schalterpaneel 5 zur Bedienung der Luftverteilung vorgesehen. Die einzelnen Druckschalter des Paneels 5A (für die Zufuhr der Luft zur Frontscheibe), 5B (für die Zufuhr der Luft zu den Insassen) und 5C (für die Zufuhr der Luft zu den Füßen) sind ebenfalls zur Anzeige Ihres Betriebszustandes mit entsprechenden LED's versehen.

In der 8 Uhr Position des Drehreglers 3A befindet sich die Stellung 9, in der die Antibeschlag-Betriebsfunktion der Klimaanlage eingeschaltet wird, wenn der Drehregler 3A entsprechend in die Stellung 9 gedreht wird. Eine analoge Stellung 10 in der 4 Uhr Position bewirkt die Einnahme der maximalen Klimatisierung. Entsprechende LED's 9A und 10A zeigen den jeweiligen Betriebszustand an.

Am Ende des Temperaturvorgabepfads des Drehreglers 3A befindet sich in der Stellung 9 eine Schaltposition, in der bei Einnahme ein Schalter die Antibeschlag-Betriebsfunktion einschaltet. Gleichzeitig wird die höchste Temperaturvorgabe beibehalten.

Zusätzlich wird bei Einnahme der Stellung 9 die Umluft-Betriebsfunktion ausgeschaltet, was an der LED 2C sichtbar wird, die Klimaanlagen-Betriebsfunktion eingeschaltet, die Front- und Heckscheibenheizung eingeschaltet, die Gebläse-Betriebsfunktion auf maximale Stärke geschaltet und die Luftverteilungs-Betriebsfunktion über geeignete Schalter geschaltet, um die Lüftung auf die Frontscheibe zu lenken, was durch die entsprechende LED des Druckknopfes 5A angezeigt wird.

## Patentansprüche

1. Manuelle Klimaanlage eines Kraftfahrzeugs mit einer Bedienvorrichtung mit wenigstens einem in einem Innenraumbereich des Kraftfahrzeugs angeordneten Bedienelement (3), das für eine manuelle Einstellung einer Betriebsfunktion in einer Bedienebene beweglich gelagert ist, und mit einer Schaltanordnung für eine Betätigung einer Antibeschlag-Betriebsfunktion der Klimaanlage,
**dadurch gekennzeichnet, daß**
das manuelle Bedienelement ein Temperaturvorgabe-Bedienelement (3) ist und das Temperaturvorgabe-Bedienelement (3) mit der Schaltanordnung derart in Wirkverbindung steht, dass die Antibeschlag-Betriebsfunktion in einer Stellung (9) des Temperaturvorgabe-Bedienelements (3) auslösbar ist.

2. Manuelle Klimaanlage nach Anspruch 1,
**dadurch gekennzeichnet, daß**
die Stellung zum Auslösen der Antibeschlag-Betriebsfunktion des manuellen Temperaturvorgabe-Bedienelements (3) die Stellung (9) für die Vorgabe der wärmsten Temperatur ist.

3. Manuelle Klimaanlage nach einem der vorhergehenden Ansprüche,
**dadurch gekennzeichnet, daß**
das Temperaturvorgabe-Bedienelement (3) einen Schalter umfasst, der in der Stellung (9) betätigt wird, um die Antibeschlag-Betriebsfunktion einzuschalten.

4. Manuelle Klimaanlage nach einem der vorherigen Ansprüche,
**dadurch gekennzeichnet, daß**
das Temperaturvorgabe-Bedienelement (3) der in der Stellung (9) eine Umluft-Betriebsfunktion ausschaltet.

5. Manuelle Klimaanlage nach einem der vorherigen Ansprüche,
**dadurch gekennzeichnet, daß**
das Temperaturvorgabe-Bedienelement (3) in der Stellung (9) eine oder mehrere der Betriebsfunktionen für eine Luftentfeuchtung, eine Klimaanlage, eine Frontscheibenheizung und eine Heckscheibenheizung einschaltet.

6. Manuelle Klimaanlage nach einem der vorherigen Ansprüche,
**dadurch gekennzeichnet, daß**
das Temperaturvorgabe-Bedienelement (3) in der Stellung (9) eine Gebläse-Betriebsfunktion auf maximale Stärke schaltet.

7. Manuelle Klimaanlage nach einem der vorherigen Ansprüche,
**dadurch gekennzeichnet, daß**
das Temperaturvorgabe-Bedienelement (3) in der Stellung (9) eine Luftverteilungs-Betriebsfunktion schaltet, um die Lüftung überwiegend auf die Front- und/oder Seitenscheiben zu lenken.

8. Manuelle Klimaanlage nach einem der vorhergehenden Ansprüche,
**dadurch gekennzeichnet, daß**
das Temperaturvorgabe-Bedienelement ein Drehregler (3A) oder ein Schieberegler ist.

9. Manuelle Klimaanlage nach einem der vorhergehenden Ansprüche,
**dadurch gekennzeichnet, daß**
das Temperaturvorgabe-Bedienelement zumindest eine Drucktaste umfasst, über die eine Temperaturvorgabe erfolgt.
